# EUROPEAN PATENT APPLICATION

(11) **EP 2 220 932 A1**
(43) Date of publication of application: **25.08.2010**
(21) Application number: 09250477.8
(22) Date of filing: 24.02.2009
(51) Int. Cl.: A01K 9/00, A01K 19/00

(54) **Automatic suckling system for calves with minimal weaning stress.**

(71) Applicant: Republic of Korea (Management: Rural Development Administration), Gyeonggi-do (KR)
(72) Inventor: Lee, Hyun J, Pyeongtaek-si Gyeonggi-do (KR); Lee, Wang S, Suwon-si Gyeonggie-do (KR); Baek, Kwang S, Suwon-si Gyeonggi-do (KR); Ki, Kwang Seok, Cheonan-si Chungnam (KR); Kim, Hyeon Seop, Suwon-si Gyeonggi-do (KR); Park, Sung Jai, Cheinan-si Chungnam (KR); Jeon, Byeong Soon, Daejeon (KR); Do, Yoon Jung, Cheonan-si Chungcheongnam-do (KR); Hur, Tai Young, Cheonan-si, Chungnam (KR); Park, Soo Bong, Hwaseong-si Gyeonggi-do (KR); Kang, Seog Jin, Dujeong-dong, Cheonan-si Chungcheongnam-do (KR); Jung, Young Hun, Hwaseong-si Gyeonggi-do (KR); Kim, Sang Bum, Cheonan-si Chungnam (KR)
(74) Representative: Wright, Howard Hugh Burnby

(57) **Abstract**

Disclosed is a suckling system wherein suckling of calves can be automatically performed and weaning stress of newborn calves can be minimized. The suckling system for calves with minimal weaning stress, includes a suckling unit and a milk feed (32) unit to feed milk to calves, and a control module (20) to control the units, wherein the suckling unit comprises a weight scale (14), and the control module measures the weight of calves and controls a feed amount of the milk feed unit, based on the weight. The milk feed unit uniformly supplies milk set to the temperature of the mother's milk to calves, the height of the teat member is controllable to a level suitable for calves, and after feeding, the teat member and the milk feed unit are automatically cleaned.

## Description

### BACKGROUND

### 1. Field

The present invention relates to an automatic suckling system for calves with minimal weaning stress wherein newborn calves undergo minimal weaning stress and are thus raised into healthy and strong cows.

### 2. Description of the Related Art

Having only one source of nutrition, newborn mammals rely entirely on milk from their mothers for development before they are able to digest more diverse foods including solid feedstuffs. In addition, as the amount of milk from their mothers decreases, the young start to ingest solid feedstuffs to supplement insufficient nutrients therein. Weaning is the process of gradually introducing the young to what will be their adult diet and withdrawing the supply of milk. The young are considered to be fully weaned once they no longer receive any breast milk and begin to rely on solid foods for all their nutrition.

In dairy farming, which primarily targets the production of milk, much effort has long been made to increase the daily production of milk from the mother cows above the amount that calves require and to maintain the production of milk at a high rate before subsequent parturition. For example, mother cows are prevented from suckling newborn calves on parturition day, in order to produce dairy products. Instead, the newborn calves are fed manually with expressed mother's milk, called artificial milk feeding.

Conventionally, dairy farmers feed calves with milk at a dose of 2 kg twice a day, amounting to 4 kg in total, using a milk bottle, or at a dose of 1.5 kg three or four times a day, amounting to 10% of the body weight in total.

With recent increasing interest in the welfare of young calves, attempts have been made to allow them to be fed with milk without restriction. When young calves have free access to artificial feeders or the udders of mother cows, they are observed to suckle 10 times a day at an amount of 10 kg in total. It is reported that 180 to 200 days after birth, however, the body weight of the calves which have been freely fed is not actually different from that of calves which have been restrictively fed a maximum amount of 10% of the body weight.

All such conventional suckling methods are disadvantageous in that because they are suddenly weaned from the milk, the young calves are not sufficiently adapted to the ingestion of solid feedstuff (fodder, hay, etc.) and thus are subject to malnutrition for a considerable period of time, which may lead to insufficient growth or immunodeficiency.

Particularly, calves which used to be satiated with milk undergo greater stress and thus require a longer time period to recover from stress. Dairy farmers are reluctant to allow young calves to freely approach udders or milk bottles for the following reasons. It takes a lot of labor to separate newborns from the mother cow every time suckling occurs. Also, the production of milk from the cows is reduced. Further, upon weaning, the young calves undergo psychological stress in addition to physical stress, so that they may become physically weak.

The problem of the conventional suckling methods resides in the fact that young calves are weaned without being sufficiently adapted to solid feedstuff, or such that they are undernourished. Therefore, there was a need for a precise suckling method that can minimize the weaning stress of calves, and for a system therefor.

Accordingly, the present applicant filed a patent application No. 2006-0071228 on July 28, 2006, was granted KR Patent No. 804,309, entitled "STEP-DOWN SUCKLING METHOD FOR MINIMIZING WEANING STRESS IN NEWBORN CALF" and filed a PCT international application (WO 2008-013344), based on the prior Korean patent. This patent provides a method for suckling a newborn calf, comprising: feeding newborn calves with a sufficient amount of milk corresponding to 15-25% of body weight for 3-4 weeks following birth, and then with a stepwise decrease in amount of milk corresponding finally to 8-15% of body weight for 3-7 days, with the differential amount replaced with water and then with gradually decreased amounts of milk from 8-15% to zero % of the body weight and with solid feedstuffs for a period from 3-5 weeks to 6-8 weeks after birth.

This method exhibits data quite different from the report in which there is no difference in the body weight of calves bred for 180 or 200 days after birth between a conventional suckling method, in which milk is fed in an amount of 10% of body weight, and a free-access method. When fed according to this method, calves were observed to increase their intake of dry feedstuff by 31% or greater until 50 days after birth and by 16% or greater until 120 days after birth, compared to when fed according to the conventional method. In addition, the weight gain of the calves fed according to the method of the present invention was found to increase by 75% until 50 days after birth and by 54% until 120 days after birth, compared to that of calves fed according to a conventional method.

However, such a superior step-down suckling method inevitably requires dairy farmers to perform considerable labor of daily farmers. For example, information of subjects (daily age, weight, intake frequency, intake time, etc.) must be manually recorded and milk feeding amount must be determined depending on the measured weight. In addition, after feeding, newborn calves must be separated from the suckling device and the used suckling device must be sterilized.

Furthermore, suckling by human labor may induce excessive feed or cause newborn calves to suffer from stress, thus making practical application thereof difficult.

### SUMMARY

Therefore, it is an aspect of the present invention to provide a suckling system wherein suckling of calves can be automatically performed and weaning stress of newborn calves can be minimized.

Additional aspects and/or advantages of the invention will be set forth in part in the description which follows and, in part, will be obvious from the description, or may be learned by practice of the invention.

In accordance with one aspect of the present invention, there is provided an automatic suckling system for calves with minimal weaning stress, including a suckling unit and a milk feed unit to feed milk to calves, wherein the suckling unit includes a teat member and the teat member controls its height and is forwardly and reversely movable.

The suckling unit may include a weight scale.

The suckling unit may include a suckling frame in which a calf is loaded, and a subject identification device to identify the presence of the calf in the suckling frame.

The automatic suckling system may further include a washer to wash the teat member and the milk feed unit.

The washer may include a heater.

The milk feed unit may include a heat exchanger to heat milk stored in a storage tank and a mix tank to store the heated milk or liquid powdered milk.

In accordance with another aspect of the present invention, there is provided an automatic suckling system for calves with minimal weaning stress, including: a suckling unit and a milk feed unit to feed milk to calves; and a control module to control the units, wherein the suckling unit includes a weight scale, and the control module measures the weight of calves and controls a feed amount of the milk feed unit, based on the weight.

The control module may include a detector to input calf information.

In accordance with another aspect of the present invention, there is provided an automatic suckling system for calves with minimal weaning stress, including a suckling unit and a milk feed unit to feed milk to calves, wherein the milk feed unit includes a heat exchanger to heat milk stored in a storage tank and a mix tank to store the heated milk or liquid powdered milk.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating an automatic suckling system for calves with minimal weaning stress according to one embodiment of the present invention;
FIG. 2 is a view schematically illustrating a suckling unit and a milk feed unit of an automatic suckling system for calves with minimal weaning stress according to one embodiment of the present invention; and
FIG. 3 is a graph illustrating an optimal suckling method using an automatic suckling system for calves with minimal weaning stress according to one embodiment of the present invention.

### DETAILED DESCRIPTION

Reference will now be made in detail to the embodiments of the present invention, examples of which are illustrated in the accompanying drawings, wherein like reference numerals refer to the like elements throughout. The embodiments are described below to explain the present invention by referring to the figures.

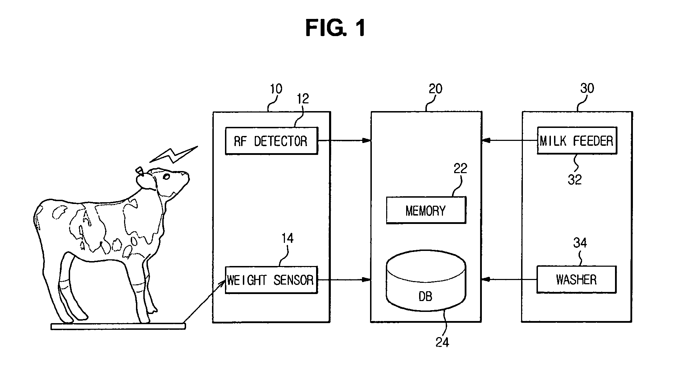

FIG. 1 illustrates an automatic suckling system for calves with minimal weaning stress (hereinafter, simply referred to as a "suckling system") according to one embodiment of the present invention.

Referring to the drawing, the suckling system comprises an input module 10 to receive calf information, a control module 20 to control milk feed amount depending on the input information, and an execution module 30 to perform milk-feeding.

The input module 10 comprises a detector 12 to identify a specific number assigned to calves, and a weight sensor 14 to measure weight of the calves. For example, the detector 12 may be a necklace worn round the neck of calves or an earmark attached to the ear and may use an electric tag such as a radio frequency identification tag (RFID) capable of sending/receiving data wirelessly. The weight sensor 14 may use a weight scale.

The control module 20 determines an amount of milk to be fed to calves depending on information input from the detector 12 and the weight sensor 14, and comprises a communication interface such as RS422 to receive information from the input module 10 and send information thereto. The control module 20 may be a general computer including a monitor, a body, a keyboard, a mouse, etc. The control module 20 comprises a memory 22 in which individual nutrition control programs and an automatic milk intake monitoring program are stored, to control and monitor intake behaviors of calves. The control module 20 further comprises a database 24 to store calf information including subject name, monthly age, weight, intake frequency and period, intake amount, intake ratio, warning indication (subjects exhibiting an intake ratio less than 75% are indicated in red), total intake ratio (total intake amount/total feed amount), average feed amount and average intake amount.

The execution module 30 comprises a milk feeder 32 to feed an appropriate amount of milk, depending on the input calf information and management programs, and a washer 34 to wash the suckling system after completion of suckling.

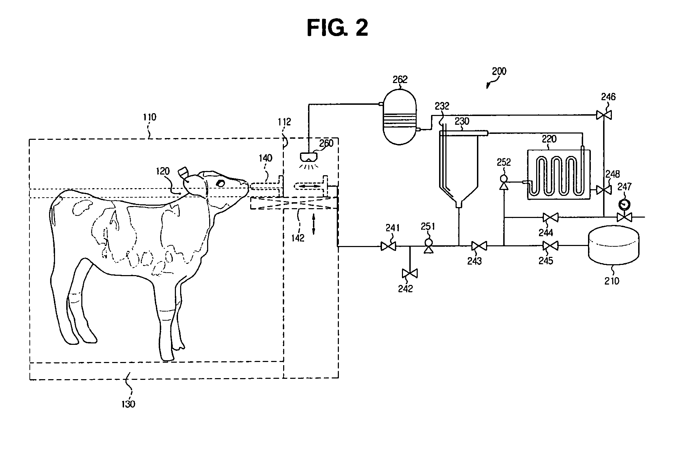

FIG. 2 illustrates a suckling system according to the present invention. The suckling system comprises a suckling unit 100 and a milk-feeding unit 200.

The suckling unit 100 comprises a suckling frame 110 in which a calf is loaded, a subject identification device 120 to identify the presence of the calf in the suckling frame 110, and a weight scale 130 to measure the weight of the calf and a teat member 140.

The suckling frame 110 may be a rectangular frame. The suckling frame 110 has a predetermined height and a narrow width such that the calf enters and exits the suckling frame in one direction.

The subject identification device 120 to determine the presence of the calf is installed in the middle of the suckling frame 110 and may use a general device such as a photosensor.

The weight scale 130 performs weight measurement using a device connected to the ground of the suckling frame 110, when the calf completely enters the suckling frame 110. The weight scale 130 may use a hanging scale to reduce malfunction due to animal wastes or foreign materials.

The teat member 140 is provided on one end 112 of the suckling frame 110, that is, on one surface, with which the calf comes in contact, provided that it completely enters the suckling frame 110. The height of the teat member 140 is automatically controllable. The height of the teat member 140 is controlled, based on five grades, according to height and weight of the calves and is in the range of about 70 to 110 cm. When the height of the teat is lower than that of the calf, the milk may be injected into the stomach or bronchus of the calves.

| Weight of calf | < 45 kg | < 60 kg | < 75 kg | < 90 kg | ≥ 90 kg |
|---|---|---|---|---|---|
| Grade | 1 | 2 | 3 | 4 | 5 |
| Height of teat(cm) | 70 | 85 | 95 | 105 | 110 |

The teat member 140 is capable of moving in forward and reverse, to avoid breakage caused by the reverse movement, when the suckling is completed. The exit of the calf is carried out by training the calf to respond to a bell signal and applying an electric pulse for 2 to 3 seconds thereto. A moving device of the teat member 140 is represented by the reference numeral "142".

The milk feed unit 200 comprises a heat exchanger 220 to heat the milk stored in a storage tank 210 and a mix tank 230 to dilute the milk or mix the same with a liquid powdered milk.

Milk (or solid powdered milk) and water in a ratio of about 7 : 1 to about 8 : 1 are refrigerated at an average temperature of about 4°C in the storage tank 210.

The heat exchanger 220 renders the temperature of the milk or solid powdered milk (substitute milk) which is stored at an average cold temperature of about 4°C in the storage tank 210 to be adjusted to a level suitable for the calf to drink. The heat exchanger 220 is provided with a circulation motor, a water feed sensor, an overheating warning sensor, an overload, etc.

The heated (diluted) milk or water is stored in an amount of 200 mL every cycle in the mix tank 230. The mix tank 230 may comprise a sensor 232 so as to recharge the milk or water, if further required, after the calf completely consumes the milk. The mix tank 130 is preferably made of heat-resistant glass to secure cleanliness and transparency, since milk often forms milk stones.

Meanwhile, the reference numerals not illustrated in FIG. 2 are valves and pumps. A first valve 241 allows milk to be fed to the teat member 140, and a second valve 242 allows water to be supplied. A third valve 243 is used to clean the line housed in the system, and rotates the line through a pump 251 to remove milk residues left in the line. When the third valve 243 opens, the first valve 241 and the second valve 242 close. A fourth valve 244 allows water to be supplied and a fifth valve 245 allows milk to be supplied. Since the water supplied through a water pipe is at high pressure, a pressure-reducing valve 247 controls the pressure to a level suitable for the system. The fifth valve 246 is used to clean the teat member 140. A seventh valve 248 supplies water to the heat exchanger, and a heat exchanger-operating pump 252 supplies milk or water to the heat exchanger 220. The operation pump 252 may be a magnetic-circulating pump causing no contamination of milk passing through the line.

A nozzle 260 of the washer 30 to clean the teat member 140 receives cleaning water through a sixth valve 246, and the cleaning water passes through a heater 262 and then maintains a high temperature not less than 90°C to sterilize the teat member 140, before it reaches the nozzle 260.

The milk feed unit 200 is washed using a washing pump 251, as mentioned above, under the condition that the first and second valves 241 and 242 close, and the third valve 243 opens. The cleaning water is discharged through the second valve 242 to the outside.

Meanwhile, a method for feeding milk to a calf using the suckling system will be described. The method utilizes a step-down suckling method for minimizing weaning stress in newborn calves, disclosed in Korean Patent No. 10-2006-71228.

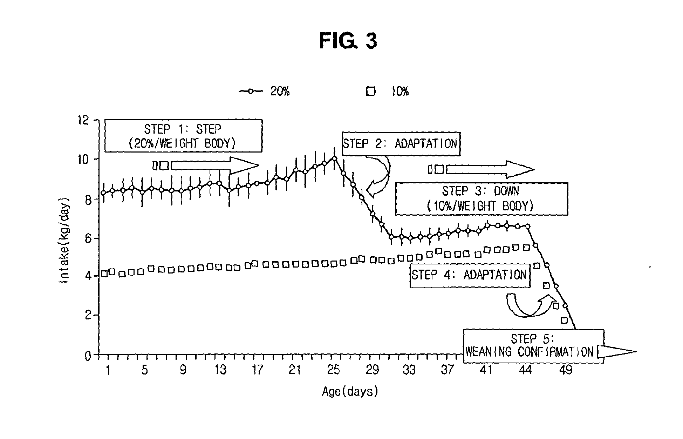

The method comprises five steps, as illustrated in FIG. 3.

In a first step, as shown in FIG. 1, calves are measured for body weight every 3 to 7 days and fed with milk in a total daily amount amounting to 15∼25% of the respective body weights. The dose is restricted within the amount from 1,500 to 2,000 cc. At this time, a calf starter feedstuff is fed to the calves in an amount sufficient for them to nibble.

A second step is to adapt the calves to a reduced amount of milk. Milk is diluted with water at an amount of 1.5∼2.5% of the total daily feed amounting to 15∼25% of the body weight, the calves are fed with the diluted milk for a period of 3 to 7 days from 3-5 weeks following birth, and with milk in an amount of 8∼15% of the respective body weights from 4-5 weeks after birth. At this time, an increased amount of calf starter feedstuff is provided, along with quality hay, so as to encourage the calves to improve their ability to ingest solid feedstuff.

A third step is a down-suckling step in which calves are fed milk in an amount of 8∼15% of their respective body weights and are provided with highly nutritious calf starter and quality hay in an amount of 1 kg per head from 4-5 weeks after birth to the weaning day (set by the dairy farmer, generally 6-8 weeks after birth).

In a fourth step, the calves are secondarily adapted to milk reduction. From 3-7 days before the weaning day, the calves are fed with milk which amounts to 8∼15% of the body weight and is diluted with water at an increasing rate of 1.5∼2.5% of the fed milk everyday, and are finally fed only 100% water from 6-8 weeks after birth.

A fifth step is to confirm the weaning by verifying that the calves are fed with only water for 3-7 days from 6-8 weeks after birth.

### [Feed Amount Determination Example: 7-week (49-day aged) milk-feeding program]

| Items | Initial step (25 days after birth) | | | | Weight-decrease step | | | | Later step (5 days before weaning) | | | Weight-decrease step | | | | |
|---|---|---|---|---|---|---|---|---|---|---|---|---|---|---|---|---|
| Age (day) | 5-9 | 10-14 | 15-19 | 20-25 | 26 | 27 | 28 | 29 | 30-34 | 35-39 | 40-44 | 45 | 46 | 47 | 48 | 49 |
| Weight measured (kg)¹ | 45 | 51 | 56 | 61 | 65 | | | | 70 | 78 | 81 | 84 | | | | |
| Milk feed amount (L) | 9.0 | 10.2 | 11.2 | 12.2 | 11.7 | 10.4 | 9.1 | 7.8 | 7.0 | 7.8 | 8.1 | 6.7 | 5.0 | 3.4. | 1.7 | 0 |
| Milk amount/ weight (%) | 20 | 20 | 20 | 20 | 18 | 16 | 14 | 12 | 10 | 10 | 10 | 8 | 6 | 4 | 2 | 0 |

| | | | | | | | | | | | | | | | | |
|---|---|---|---|---|---|---|---|---|---|---|---|---|---|---|---|---|
| Weight measured (kg)¹: variable (an average of normal average weights on the next day) | | | | | | | | | | | | | | | | |

Meanwhile, the suckling system according to the embodiment used to perform the step-down suckling method performs system check-up operations, for example, preheating the weight scale and the heat exchanger, and cleaning lines, and then is readied, when power is applied.

When the subject identification device 120 detects that a calf enters the suckling frame 110, the body weight of the calf is measured and the electric tag information is read and then transmitted to the control module 20. The control module 20 calculates milk feed amount, depending on respective information and body weight, and allows milk-feeding to start, while the teat member 140 moves forward while under automatic height control.

During feeding, the weight of the calf is continuously checked. After feeding, the calf exits and the teat member 140 is retracted. The retracted teat member 140 is sterilized with heated washing water and the line is washed therewith, to prepare the following milk-feeding.

The amount of milk fed to the calf is stored in the database 24, according to items such as age in days, period, step and subject.

As apparent from the fore-going, an automatic suckling system for calves with minimal weaning stress according to the present invention has the following advantages. First, milk (or liquid powered milk) set to the temperature of the mother's milk can be homogeneously fed. Second, a predetermined amount of milk, depending on age and body weight can be automatically fed to calves. Third, the height of teat member is controllable within a range suitable for calves. Fourth, after milk-feeding, the teat member and milk feed unit can be automatically cleaned.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An automatic suckling system for calves with minimal weaning stress, comprising a suckling unit and a milk feed unit to feed milk to calves, wherein the suckling unit comprises a teat member and a height of the teat member is controllable.

2. The automatic suckling system according to claim 1, wherein the teat member is capable of moving in forward and reverse.

3. The automatic suckling system according to claim 1, wherein the suckling unit comprises a weight scale.

4. The automatic suckling system according to claim 1, wherein the suckling unit comprises a suckling frame in which a calf is loaded, and a subject identification device to identify the presence of the calf in the suckling frame.

5. The automatic suckling system according to claim 1, wherein the automatic suckling system further comprises a washer to wash the teat member and the milk feed unit.

6. The automatic suckling system according to claim 5, wherein the washer comprises a heater.

7. The automatic suckling system according to claim 1, wherein the milk feed unit comprises a heat exchanger to heat milk stored in a storage tank and a mix tank to store the heated milk or liquid powdered milk.

8. An automatic suckling system for calves with minimal weaning stress, comprising:
a suckling unit and a milk feed unit to feed milk to calves; and
a control module to control the units,
wherein the suckling unit comprises a weight scale, and the control module measures the weight of calves and controls a feed amount of the milk feed unit, based on the weight.

9. The automatic suckling system according to claim 8, wherein the suckling unit comprises a teat member, wherein height of the teat member is controlled and the teat member is forwardly and reversely movable.

10. The automatic suckling system according to claim 9, wherein the automatic suckling system further comprises a washer to wash the teat member and the milk feed unit.

11. The automatic suckling system according to claim 10, wherein the washer comprises a heater.

12. The automatic suckling system according to claim 8, wherein the milk feed unit comprises a heat exchanger to heat milk stored in a storage tank and a mix tank to store the heated milk or liquid powdered milk.

13. The automatic suckling system according to claim 8, wherein the control module comprises a detector to input calf information.

14. An automatic suckling system for calves with minimal weaning stress, comprising a suckling unit and a milk feed unit to feed milk to calves, wherein the milk feed unit comprises a heat exchanger to heat milk stored in a storage tank and a mix tank to store the heated milk or liquid powdered milk.

15. A suckling apparatus for feeding un-weaned animals, comprising a suckling unit and a milk feed unit to feed milk to the animal wherein the suckling unit comprises a teat member the height of which is adjustable.
